# EUROPEAN PATENT APPLICATION

(11) **EP 4 703 033 A1**
(43) Date of publication of application: **04.03.2026**
(21) Application number: 24197668.7
(22) Date of filing: 30.08.2024
(51) Int. Cl.: B01J 4/00, B01J 8/02, B01J 8/06, C01B 3/38

(54) **REFORMER TUBE FOR CONVERTING A FEED GAS STREAM**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Ulber, Dieter, 60439 Frankfurt am Main (DE); Lutz, Michael, 60439 Frankfurt am Main (DE); Coscia, Antonio, 60439 Frankfurt am Main (DE); Kumar, Rakesh, 60439 Frankfurt am Main (DE); May, Wolfgang, 60439 Frankfurt am Main (DE)
(74) Representative: Air Liquide

(57) **Abstract**

The invention relates to a reformer tube (1) for converting a feed gas stream into a product gas stream, comprising an outer reactor tube (3), a catalyst arrangement (20) and an inner tube arrangement (10) disposed in the outer reactor tube (3). A head section (6) is attached to the outer reactor tube (3), the head section (6) comprising an annular chamber (15) fluidly connected to an outlet (17) for the synthesis gas stream and the inner tube arrangement (10).

## Description

### TECHNICAL FIELD

The invention relates to a reformer tube for converting a feed gas stream into a product gas stream, in particular a synthesis gas stream, the reformer tube comprising an outer reactor tube having an open tube end and an opposite closed tube end, the tube interior of the outer reactor tube providing a reaction chamber, wherein a tube assembly and a catalyst arrangement are disposed in the reactor tube. The invention further relates to a reformer furnace.

### BACKGROUND OF THE INVENTION

By means of steam, hydrocarbons can catalytically be converted to synthesis gas, i.e. mixtures of hydrogen (Hz) and carbon monoxide (CO). This so-called steam reforming is the most frequently used method for the production of synthesis gas, which subsequently can be converted to further important basic chemicals such as methanol or, after shift conversion and hydrogen separation, to ammonia. Although different hydrocarbons, such as naphtha, liquefied gas or refinery gases, can be converted, steam reforming with methane-containing natural gas is dominant.

Similarly, ammonia (NH₃) can be cracked in reformer tubes to produce a mixture of hydrogen (H₂) and nitrogen (N₂) as the product gas stream. Ammonia cracking is an essential process for generating hydrogen, which is a critical component in various chemical processes or as a hydrogen and an energy carrier.

Both steam reforming and ammonia cracking are strongly endothermic processes and are characterized by a high energy demand. Therefore, they are carried out in a reformer furnace equipped with numerous catalyst-containing reformer tubes arranged in parallel. Inside these tubes, the steam reforming reaction or ammonia cracking occurs. The furnace's outer walls, ceiling, and bottom are lined with several layers of refractory material capable of withstanding temperatures up to 1200°C. The reformer tubes are typically heated by burners mounted on the upper or lower surfaces or on the side walls of the reformer furnace. Heat transfer to the reformer tubes is achieved through thermal radiation and convective heat transfer from the hot flue gases.

In industrial applications, reformer tubes are employed in various configurations to efficiently carry out chemical reactions. The three main types of reformer tubes are those with inlet and outlet on opposite sides, top-fed-top-outlet, and bottom-fed-bottom-outlet reformer tubes.

Reformer tubes with inlet and outlet on opposite sides of the reformer tube represent a widely used design. In this configuration, the feed gas is introduced at one end of the tube and the product gas mixture is discharged at the opposite end. Top-fed-top-outlet and bottom-fed-bottom-outlet reformers utilize a one-sided open outer reactor tube, within which an inner tube is arranged. The feed gas stream is introduced through the open end of the outer tube, passes through the catalyst arrangement, e.g., a catalyst bed, and then enters the inner tube arrangement near the closed end of the outer tube. The inner tubes direct the converted feed gas in a countercurrent flow back towards the open end of the outer tube, close to where it is discharged. As the gas stream flows through the inner tube arrangement, it transfers heat to the interior of the outer reactor tube and the catalyst bed, which is particularly advantageous for energy savings.

In bottom-fed-reformers, the reformer tube is arranged vertically with the open end arranged at the bottom. The feed gas is introduced at a bottom end of the outer tube, flows upward through the catalyst, and is then redirected through the inner tube arrangement to the bottom where the synthesis gas outlet is arranged. A potential drawback of this design is the disturbance of the catalyst by the upward-flowing feed gas, particularly if the catalyst is granular, which can lead to a fluidization of the catalyst. Additionally, assembly and maintenance tasks are generally more complex for bottom-fed-reformers.

For top-fed-reformers, the reformer tube is arranged vertically with the open end arranged at the top, i.e., both the inlet and outlet are located at the top end of the reformer tube. The feed gas is introduced at the top end, flows downward through the catalyst, and the redirection of the gas flow into a countercurrent flow occurs at the lower part of the outer tube. While top-fed-reformers offer improved production efficiency, they require significantly more space compared to traditional reformers. The placement of both the inlet and outlet at the same end of the reformer tube limits the number of tubes that can be installed in a given area within a reformer furnace, and makes maintenance, tube replacement, and catalyst refilling more complex and labor-intensive.

It is object of the invention to improve installation and efficiency of reformer tubes and reformer furnaces.

### SUMMARY OF THE INVENTION

The object of the invention is achieved by a reformer tube and a reformer furnace as defined in the independent claims. Further and preferred embodiments of the invention are disclosed in the following description and in the dependent claims.

The invention is described in terms of multiple aspects, encompassing a reformer tube and a reformer furnace. The descriptions of each aspect complement one another, so that the descriptions of the reformer tube can also be understood as descriptions of the reformer furnace, and vice versa.

A first aspect of the invention relates to a reformer tube for converting a feed gas stream into a product gas stream. The reformer tube comprises an outer reactor tube having an open tube end and, in the opposite direction, a closed tube end, the tube interior of the outer reactor tube providing a reaction chamber; a head section attached to the open tube end, the head section comprising an inlet for a feed gas stream having an inlet flow section and an outlet for a product gas stream, the inlet flow section being in fluid communication with the tube interior of the outer reactor tube. The reformer tube further comprises an inner tube arrangement disposed in the outer reactor tube and having an inlet end and an outlet end; and a catalyst arrangement disposed in the outer reactor tube. The inlet end of the inner tube arrangement is in fluid communication with the inlet for the feed gas stream of the head section and the outlet end is in fluid communication with the outlet for the product gas of the head section. The inlet end of the inner tube arrangement is arranged in the outer reactor tube such that a feed gas stream introduced into the inlet of the head section flows through the catalyst arrangement and subsequently flows in a countercurrent flow through the inner tube arrangement to the outlet for the product gas stream. The outlet for the product gas stream and the outlet end of the inner tube arrangement are fluidly connected to each other via an annular chamber that at least partially surrounds the inlet flow section.

The annular chamber around the inlet flow section for the feed gas, allows the outlet for the product gas stream to be arranged in a flexible manner at any location around the longitudinal axis of the reformer tube. Due to the flexibility the arrangement of the reformer tubes and the laying of the conduits, piping, e.g., pigtails, etc., is simplified. This facilitates installation and maintenance. Further, the head section allows the overall design of the reformer tube to be kept slim and slender. Even further, by providing an annular product gas collecting chamber, the effects of metal dusting can be effectively prevented. Metal dusting is a significant issue in the operation of reformer tubes used in industrial processes such as steam methane reforming. This phenomenon involves the formation of metal dust or fines on the surface of metal components, which can cause severe degradation and eventual failure of the equipment. One critical area of concern for metal dusting is at the connection points between the reformer tube outlets and the attached piping. The proposed head section design allows for very short connections to the connected piping, significantly reducing the exposure of metal parts to the corrosive environment and the potential for metal dusting.

The reformer tube extends between its ends along its tube axis or its longitudinal axis. When used as intended, the reformer tube is arranged vertical in relation to a horizontal plane, i.e., the reformer tube is aligned vertically, i.e., its longitudinal axis is oriented in the direction of gravity.

The term annular chamber is meant to refer to a chamber that extends around the inlet flow section, completely or only partially, like an annular segment. The annular chamber provides a ring manifold. The annular chamber extends in circumferential direction around the inlet flow section at least beyond an opening that connects the annular chamber with the outlet, preferably at least 2 times the size of the opening. Preferably, the annular chamber extends all the way around the inlet flow section, i.e., as a full ring. However, intermediate extensions of the annular chamber such as a half ring annular chamber (180°) are, of course, possible depending on the requirements.

The terms open end and closed end of the outer reactor tube or the reformer tube are used to illustrate that the gas flows into the reformer tube at one end and out again at the same end. Hence, the closed end can be an open tube end that has been closed.

The head section is adapted to form a closure of the open end of the outer reactor tube or the reformer tube and may therefore also be referred to as a top cover. The head section serves as the connection for feed and discharge lines.

The inlet and outlet of the head section are connected fluidly to each other exclusively via the inner tube arrangement, thus ensuring that the feed gas is effectively converted. In the inner tube arrangement, the gas flows in a countercurrent or counterflow to the feed gas flow, which flows from the open end of the reactor tube toward the closed end and through the catalyst arrangement. Counterflow means that the gas flows in the opposite direction, i.e. in the direction from the closed end of the outer reactor tube toward the open end. While the inflow takes place outside the inner tube arrangement, the counterflow flows in the inner tube arrangement tube assembly up to the annular chamber.

Fluid connection between two areas of the reformer tube is understood to mean any type of connection that allows a fluid, for example the feed gas stream or the product gas product stream, to flow from one of the two areas to the other, irrespective of any intermediate areas or components. By heat exchange relationship is meant the possibility of heat exchange or heat transfer between two areas of the reformer tube, whereby all mechanisms of heat exchange or heat transfer such as heat conduction, heat radiation or convective heat transport are conceivable.

The inlet and outlet may each be provided by an opening, like a flanged opening. The opening has an axis along which the gas flows through the opening.

The annular chamber may be arranged outside the head section, e.g. above it, or at least partly inside the head section. The annular chamber may be formed integrally with a body of the head section.

According to a further embodiment of the invention, the outlet for the product gas is attached to a side section or lateral section of the annular chamber, i.e., an outer circumferential surface. The outlet for the product gas is connected to the annular chamber such that the product gas can flow out of the annular chamber transversely to the feed gas flow in the inlet flow section, i.e., in a space-saving manner, as it does not interfere with the arrangement of the inlet. The lateral connection of the outlet to the annular chamber also offers an increased degree of flexibility when installing the reformer tubes and the respective piping or conduits, as the annular chamber effectively can provide a 360° mounting surface for the outlet.

According to a further embodiment of the invention, the inlet and the inlet flow section are aligned coaxially or at least parallel to a longitudinal axis of the outer reactor tube or the reformer tube. This embodiment provides a central arrangement of the inlet on the reformer tube, allowing the feed gas stream to be introduced into the outer reactor tube from above without the need for deflections. This top arrangement of the inlet is even more space-saving for reformer furnaces that include a large number of reformer tubes and the necessary connections for gas supply and gas discharge.

According to a further embodiment of the invention, the inlet and the inlet flow section are dimensioned, i.e., in terms of width and diameter, such that the reformer tube can be filled and/or refilled with the catalyst via the inlet and the inlet flow section. This embodiment represents a very compact and effective system integration. Since the catalyst material must be refilled from time to time, reformer tubes usually include additional filling openings, e.g., opening closed with a lid, in addition to the feed gas inlet. Due to feed gas inlet and the refill opening for the catalyst material integrated in one opening, distinct refill openings can be dispensed with. Preferably, the head section only has a single opening for feed gas supply and catalyst refilling and one outlet opening. Preferably, the inlet is adapted such that the catalyst arrangement is visually accessible through the inlet, i.e., the inlet is adapted for visual inspection of the catalyst arrangement.

According to a further embodiment of the invention, the inlet and/or the outlet are designed as flange connections, resp., are flanged. Flange connections allow easy connection of conduits and the like, which means that the head section is already prepared for installation work.

According to a further embodiment of the invention, the inner tube arrangement comprises at least one tube extending spirally, at least in sections, between the open tube end and the closed tube end, which means along the longitudinal axis. Coiled tubes have a greater effective length over the length of the reformer tube, thus providing more space and time for chemical and/or thermal processes. It is preferred that the reformer tube comprises a plurality of tubes that extend helically in the interior of the outer reactor tube. It is preferred that the opening of the inlet for the feed gas of the head section and/or the inlet flow section is smaller than the distance between opposing tubes of the inner tube arrangement.

According to a further embodiment of the invention, the inner tube arrangement extends along the longitudinal direction beyond the open tube end of the outer reactor tube.

According to a further embodiment of the invention, the inner tube arrangement comprises multiple tubes, the outlet ends of which open into the annular chamber and around the inlet flow section, preferably evenly distributed around the inlet flow section. It is preferred when multiple tubes extend, e.g., in a spiral shape, toward to annular chamber along the longitudinal axis of the reformer tube. When the gas flow from the outlet end of the tubes enters the annular chamber, it is distributed around the incoming feed gas flow and a particularly uniform product gas flow is produced. Further, the arrangement of the outlet ends around the incoming feed gas flow allows the overall design of the reformer to be kept compact.

According to a further embodiment of the invention, the annular chamber at least partially forms the inlet flow section. A radial inner wall section of the annular chamber extending in circumferential direction may provide the inlet flow section in its center. This integral solution is effective in terms of space saving and also saves costs.

According to a further embodiment of the invention, the inner tube arrangement is adapted for a heat exchanging relationship with the catalyst arrangement and/or with the feed gas stream flowing through the outer reactor tube.

According to a further embodiment of the invention, the interior of the head section, that is in fluid communication with the interior of the outer reactor tube at least partly tapers towards the closed end of the outer reactor tube, meaning it narrows. In a side sectional view, the head section has at least partly a conical shape, with the internal diameter increasing towards the upper head section and/or the outlet. This widens the inlet for the catalyst, which enables the outer reactor tube to be loaded with the catalytic converter more effectively.

According to a further embodiment of the invention, the annular chamber is arranged outside the outer reactor tube and the head section extends from an upper first end to a lower second end, the second end providing a connecting portion for connecting the head section to the outer reactor tube, wherein, in a direction from the connecting portion toward the first end, the head section expands to form an enlarged chamber, the inner diameter of the enlarged chamber being larger than the inner diameter of the outer reactor tube. Preferably, an extension of the inner tube arrangement in the radial direction, i.e., transverse to the longitudinal axis of the reformer tube, is larger in the extended chamber than in the outer reactor tube, i.e. the section of the inner tube arrangement in the extended chamber is wider than the section of the inner tube arrangement in the outer reactor tube.

According to a further embodiment of the invention, the inner tube arrangement is mechanically supported by the head section, e.g., fixed to the head section, such that the inner tube arrangement can be removed from the reactor tube by removing the head section from the outer reactor tube.

According to a further embodiment of the invention, the head section, the inner tube arrangement and the annular chamber form an assembly that can be attached to the outer reactor tube as a unit and detached from it as a unit.

According to a further embodiment of the invention, the axes of the outlet for the product gas stream and the inlet for a feed gas stream are coaxial and/or parallel to a longitudinal axis of the outer reactor tube. By aligning the inlet and outlet of the head section vertically like the outer reactor tube, the introduction of torques from the feed or discharge lines is effectively reduced.

According to a further embodiment of the invention, the outlet for the product gas stream and the inlet for a feed gas stream are arranged on different horizontal planes.

Further, the inlet and the outlet may be oriented in the same direction, e.g., vertically upwards. It is preferred when the inlet and outlet are arranged on different horizontal planes. The inlet and the outlet may also be oriented in different directions, e.g., the inlet vertically and the outlet horizontally.

The head section, in particular the gas-conducting sections, is preferably lined with a nitriding-resistant material.

A further aspect of the invention relates to a reformer furnace comprising refractory-lined or refractory-lined walls, a ceiling and a floor and an interior space formed thereby, and at least one reformer tube as described herein and at least one firing device for heating the reformer tube.

Preferably, the at least one reformer tube in the reformer furnace is oriented vertically with the closed end facing downwards, wherein the inlet and the outlet are arranged outside the ceiling of the reformer furnace.

### BRIEF DESCRIPTION OF THE FIGURES

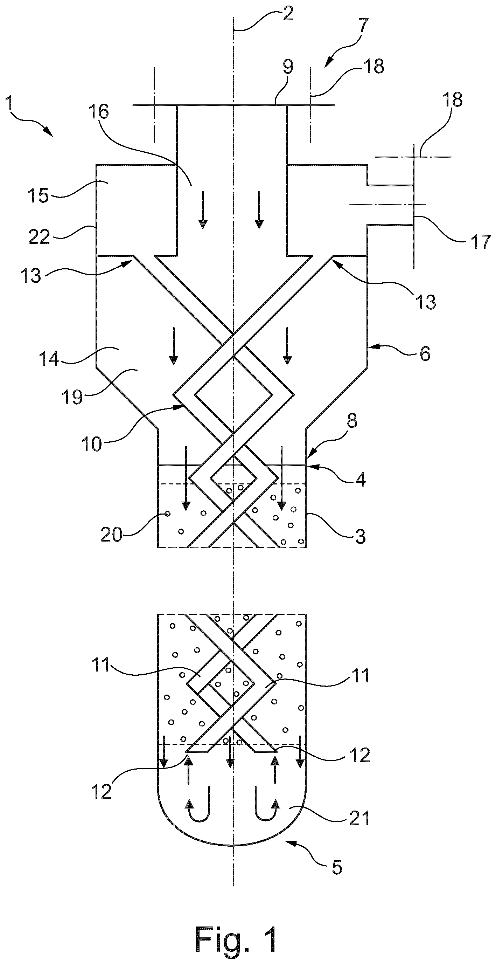

The invention will now be described referring to an exemplary embodiment shown in FIG. 1 which shows a side sectional view of a reformer tube according to a first embodiment of the invention.

**FIG. 1** is a sectional side view of a reformer 1 for converting a feed gas stream into a product gas stream, the reformer tube 1 extending along a longitudinal axis 2. Middle parts of the reformer tube 1 are not shown. The reformer tube 1 comprises an outer reactor tube 3 extending along the longitudinal axis 2 and having an open tube end 4 and an opposite closed tube end 5. At the open end 4, a head section 6 is attached to the outer reactor tube 5 thereby covering the open end 4.

The reformer 1 is mounted in a reformer furnace (not shown) in a vertical manner with the longitudinal axis 2 aligning with the direction of gravity. The head section 6 comprises an upper end 7 and a lower end 8, the lower end 8 being attached to the open tube end 4 of the outer reactor tube 3. At the upper end 7 of the head section 6 an inlet 9 for a feed gas stream is provided.

In the outer reactor tube 3 an inner tube arrangement 10 with two separate tubes 11 extending in a helical manner along the longitudinal axis 2 is accommodated. Each of the tubes 11 has an inlet end 12 located at the closed tube end 5 and a outlet end 13 located at the upper end of the reformer tube 1. The inlet end 12 is in fluid communication with the interior 14 of the outer reactor tube 3, the interior 14 providing a reactor chamber. The outlet end 13 of the inner tube arrangement 10 is in fluid communication with an annular chamber 15 which is otherwise fluidically separated from the reactor chamber 14 or the inlet 9 for the feed gas stream. The inlet 9 of the head section 6 is in fluid communication with the interior 14 via a conduit-like inlet flow section 16. The inlet flow section 16 is surrounded by the annular chamber 15, wherein in radially inward direction, i.e., in a direction transverse to the longitudinal axis 2, a circumferentially extending inner wall of the annular chamber 15 provides the conduit wall of the inlet flow section 16.

The outlet ends 13 of the inner tube arrangement 10 open into the annular chamber 15 while the annular chamber 15 is fluidly connected to an outlet 17 for the product gas stream produced in the tube reformer 1. The outlet 17 is in communication with the interior 14 of the outer reactor tube 3 only via the tube arrangement 10. The outlet 17 is a flanged opening attached to the side, i.e., horizontally, to the annular chamber 15. Similar, the inlet 9 is a flanged opening attached to the upper surface of the head section 6. Each of the flanged openings comprises flanging means 18, e.g., screw holes, for connecting piping, ducts, conduits, etc.

In the embodiment shown, natural gas and reforming steam may be introduced through the inlet 9 such as to pass the inlet flow section 16. In the feed gas flow direction (indicated by arrows) following the inlet flow section 16, the head section 6 comprises an enlarged chamber 19 which tapers, i.e., becomes narrower, in the direction of the lower closed end 5.

In the reactor chamber 3, a catalyst bed 20 is provided which is formed of particles of a solid, nickel-based reforming catalyst. The catalyst bed 20 is schematically represented by dots and is fixed in the outer reactor tube 3 by means of a perforated plate. At the reforming catalyst, the endothermal steam reforming reaction takes place. The feed gas stream flows in downward direction as indicated by arrows. After leaving the catalyst bed 20, the partly converted natural gas, which beside carbon oxides and hydrogen also contains not yet converted methane, enters into a free space 21 which is arranged at the closed tube end 5 of the outer reactor tube and enters into the inlet ends 12 of the inner tube arrangement 10. The gas stream flowing through the inner tube arrangement 10 countercurrently to the feed gas stream in upward direction toward the annular chamber 15 releases part of its heat to the catalyst bed and the feed gas stream through the walls of the tubes 11. Then the gas stream (now product gas stream) is introduced into the annular chamber 15 and then discharged out of the annular chamber 15 through the outlet 17.

The axis of the inlet 9 is arranged vertically and coaxially with regard to the longitudinal axis 2. The head section 6 provides only one opening (inlet 9) through which the feed gas stream is introduced and through which the catalyst can be refilled.

The head section 6 comprises a body 22 that is attached to the open end 4 of the outer reactor tube 3. The inner tube arrangement 10 is fixed with its upper end to the body 22, i.e., the inner tube arrangement 10 is mechanically supported by the head section 6. The inlet 9, the outlet 17, the annular chamber 15 and the tube arrangement 10 form, together with the body 22, an assembly that can be detached from the outer reactor tube 3 in one piece.

### Reference numerals

- 1: reformer tube
- 2: longitudinal axis
- 3: outer reactor tube
- 4: open tube end
- 5: closed tube end
- 6: head section
- 7: upper end of head section
- 8: lower end of head section
- 9: inlet for feed gas stream
- 10: inner tube arrangement
- 11: tube of inner tube arrangement
- 12: inlet end
- 13: outlet end
- 14: interior of outer reactor tube / reactor chamber
- 15: annular chamber
- 16: inlet flow section
- 17: outlet for product gas stream
- 18: flanging means
- 19: enlarged chamber
- 20: catalyst bed
- 21: free space
- 22: body of head section

## Claims

1. Reformer tube (1) for converting a feed gas stream into a product gas stream, comprising:
an outer reactor tube (3) having an open tube end (4) and an opposite closed tube end (5), the tube interior (14) of the outer reactor tube (3) providing a reaction chamber;
a head section (6) attached to the open tube end (4), the head section (6) comprising:
an inlet (9) for a feed gas stream with an inlet flow section (16), the inlet flow section (16) being in fluid communication with the tube interior (14) of the outer reactor tube (3), and
an outlet (17) for a product gas stream;
an inner tube arrangement (10) disposed in the outer reactor tube (3) and having an inlet end (12) and an outlet end (13); and
a catalyst arrangement (20) disposed in the outer reactor tube (3);
wherein the inlet end (12) of the inner tube arrangement (10) is in fluid communication with the inlet (9) for the feed gas stream of the head section (6) and the outlet end (13) is in fluid communication with the outlet (17) for the product gas of the head section (6),
wherein the inlet end (12) of the inner tube arrangement (10) is arranged in the outer reactor tube (3) such that a feed gas stream introduced into the inlet (9) flows through the catalyst arrangement (20) and subsequently flows in a countercurrent through the inner tube arrangement (10) to the outlet (17) for the product gas stream;
wherein the outlet (17) for the product gas stream and the outlet end (13) of the inner tube arrangement (10) are fluidly connected to each other via an annular chamber (15), the annular chamber (15) at least partially surrounding the inlet flow section (6).

2. Reformer tube (1) according to claim 1, wherein the outlet (17) for the product gas is attached to a side section of the annular chamber (15).

3. Reformer tube (1) according to any of the preceding claims, wherein the inlet (9) and the inlet flow section (16) are aligned coaxially or at least parallel to a longitudinal axis (2) of the outer reactor tube (3).

4. Reformer tube (1) according to any of the preceding claims, wherein the inlet (9) and the inlet flow section (16) are adapted such that the reformer tube (1) can be filled and/or refilled with the catalyst via the inlet (9) and the inlet flow section (16).

5. Reformer tube (1) according to any of the preceding claims, wherein the inlet (9) and/or the outlet (17) are designed as flange connections.

6. Reformer tube (1) according to any of the preceding claims, wherein the inner tube arrangement (10) comprises at least one tube (11) extending spirally, at least in sections, between the head section (6) and the closed tube end (5).

7. Reformer tube (1) according to any of the preceding claims, wherein the inner tube arrangement (10) comprises multiple tubes (11) extending between the head section (6) and the closed tube end (5), the outlet ends (13) of which open into the annular chamber (15) around the inlet flow section (16), preferably evenly distributed around the inlet flow section (16).

8. Reformer tube (1) according to any of the preceding claims, wherein the annular chamber (15) at least partially forms the inlet flow section (16).

9. Reformer tube (1) according to any of the preceding claims, wherein the inner tube arrangement (10) is adapted for a heat exchanging relationship with the catalyst arrangement (20) and/or with the feed gas stream flowing through the outer reactor tube (3).

10. Reformer tube (1) according to any of the preceding claims, wherein the interior of the head section (6) at least partly tapers towards the closed end (5) of the outer reactor tube (3).

11. Reformer tube (1) according to any of the preceding claims, wherein the annular chamber (15) is arranged outside the outer reactor tube (3) and the head section (6) extends from an upper first end (7) to a lower second end (8), the second end (8) providing a connecting portion for connecting the head section (6) to the outer reactor tube (3), wherein, in a direction from the connecting portion toward the first end (7), the head section (6) expands to form an enlarged chamber (19), the inner diameter of the enlarged chamber (19) being larger than the inner diameter of the outer reactor tube (3), wherein, preferably, an extension of the inner tube arrangement (10) in the enlarged chamber (19) in the radial direction is larger than in the outer reactor tube (3).

12. Reformer tube (1) according to any of the preceding claims, wherein the inner tube arrangement (10) is mechanically supported by the head section (6).

13. Reformer tube (1) according to any of the preceding claims, wherein the head section (6), the inner tube arrangement (10) and the annular chamber (15) form an assembly that can be attached to the outer reactor tube (3) as a unit and detached from it as a unit.

14. Reformer furnace, comprising refractory-lined or refractory-lined walls, a ceiling and a floor and an interior space formed thereby, at least one reformer tube (1) according to any of the preceding claims and at least one firing device for heating the reformer tube.

15. Reformer furnace according to claim 11, wherein the at least one reformer tube (1) in the reformer furnace is oriented vertically with the closed end (5) facing downwards, wherein the inlet (9) and the outlet (17) are arranged outside the ceiling of the reformer furnace.
